Europäisches Patentamt

European Patent Office

Office européen des brevets

(11) Veröffentlichungsnummer: **0 215 267 B1**

# (12) EUROPÄISCHE PATENTSCHRIFT

(45) Veröffentlichungstag der Patentschrift: **17.04.91**

(21) Anmeldenummer: **86110743.1**

(22) Anmeldetag: **04.08.86**

(51) Int. Cl.⁵: **C08G 18/78**, C09D 123/00, C09D 109/06, C09D 7/12

(54) Verwendung von Polyisocyanaten oder von Polyisocyanatgemischen als Zusatzmittel für wässrige Dispersionsfarben.

(30) Priorität: **16.08.85 DE 3529249**

(43) Veröffentlichungstag der Anmeldung:
**25.03.87 Patentblatt 87/13**

(45) Bekanntmachung des Hinweises auf die Patenterteilung:
**17.04.91 Patentblatt 91/16**

(84) Benannte Vertragsstaaten:
**AT BE CH DE FR GB IT LI NL SE**

(56) Entgegenhaltungen:
**EP-A- 0 061 628**
**FR-A- 2 381 800**
**GB-A- 1 129 408**

(73) Patentinhaber: **BAYER AG**

**W-5090 Leverkusen 1 Bayerwerk(DE)**

(72) Erfinder: **Kubitza, Werner, Dipl.-Ing.**
**Eduard-Spranger-Strasse 22**
**W-5090 Leverkusen 3(DE)**
Erfinder: **Mennicken, Gerhard, Dr.**
**Am Wasserturm 16**
**W-5090 Leverkusen 3(DE)**

## Beschreibung

Die Erfindung betrifft die Verwendung von organischen Polyisocyanaten oder von Gemischen von organischen Polyisocyanaten mit aliphatisch und/oder cycloaliphatisch gebundenen Isocyanatgruppen als, die lacktechnischen Eigenschaften verbessernde, Zusatzmittel für wäßrige Dispersionsfarben auf Basis von Homo- oder Copolymerisaten olefinisch ungesättigter Monomerer.

Dispersions-Anstrichfarben verdanken ihre weite Verbreitung vor allem ihrer Wasserverdünnbarkeit sowie ihrer leichten Verarbeitbarkeit. So werden u.a. für Wandanstriche sowohl im Innen- wie im Außenbereich auf diversen mineralischen Baustoff-Oberflächen wie z.B. Beton, Putze, Kalksandstein, Gips usw. Dispersionsfarben verwendet. Dem Hersteller solcher Dispersionsfarben stehen zahlreiche wäßrige Polymerdispersionen als Bindemittel zur Verfügung. Diese werden gewöhnlich mit einem Feststoff-Anteil von 40-60 Gew.-% angeboten. Das in Wasser dispergierte Polymer-Bindemittel besteht in der Regel aus Homo- oder Copolymerisaten olefinisch ungesättigter Monomerer wie z.B. Polyvinylacetat, Polyvinylpropionat, Copolymeren aus Styrol/Butadien, Styrol/Acrylsäureestern, Homo- wie auch Copolymeren diverser Acrylsäureester.

Es handelt sich um wäßrige Dispersionen thermoplastischer Polymerer die unter Zusatz der üblichen Hilfs- und Zusatzmittel wie z.B. Pigmenten, Füllstoffen, Verdickern, Emulgatoren, Benetzungsmitteln und anderen Additiven zur verarbeitungsfertigen Dispersionsfarbe formuliert werden.

Die Verarbeitung erfolgt mittels Rolle, Pinsel, Spritzpistole, Airless-Spritzpistole oder Tauchen, bevorzugt jedoch Rolle. 10 bis 30 Minuten nach dem Auftrag ist die Beschichtung trocken und bildet innerhalb weiterer 6 bis 12 Stunden einen harten, stumpfmatten bis seidenglänzenden Film mit dekorativer Oberfläche.

Nachteilig ist bei derartigen Beschichtungen, daß ihre Belastbarkeit durch Chemikalien, organische Lösungsmittel sowie zahlreiche Gebrauchschemikalien mit lösenden Eigenschaften wie z.B. Desinfektions- und Reinigungsmittel u.a. in Krankenhäusern sehr begrenzt ist. Auch die Oberflächen-Reinigung mit Heißdampf ist aufgrund des thermoplastischen Verhaltens erheblich eingeschränkt.

Die mechanische Belastbarkeit, z.B. beim Scheuern der Oberflächen entspricht darüber hinaus in vielen Fällen nicht den Anforderungen der Praxis. Schließlich ist zu vermerken, daß Dispersionsanstriche bei der Anwendung im Außenbereich den Nachteil der schnellen Verschmutzung sowie in nicht seltenen Fällen der schnellen Kreidung und des damit verbundenen Filmabbaues mit sich bringen.

Zur Verbesserung der Verschleißeigenschaften von Dispersionsbeschichtungen werden veschiedene Verfahren angewendet. Praxisüblich ist die Versiegelung der Oberflächen mit beständigen Klarlackfilmen z.B. auf Polyurethanbasis. Auch transparente Filme auf Basis von Polymerisat-Bindemitteln werden verwendet, um die Oberflächenglätte zu erhöhen und somit die Schmutzanfälligkeit der sonst rauhen Oberfläche zu mindern. Diese Verfahren kosten jedoch zusätzlichen Aufwand an Zeit und Material.

Es war daher die der Erfindung zugrundeliegende Aufgabe Dispersionsanstrich-Systeme zur Verfügung zu stellen, die die Herstellung von Beschichtungen eines verbesserten Eigenschaftsniveaus, insbesondere einer verbesserten Scheuer-, Lösungsmittel- und Chemikalienfestigkeit, einer erhöhten Wetterbeständigkeit und einer geringeren Quellfähigkeit gestatten, ohne daß hierbei die charakteristischen Vorteile der üblichen Dispersionsfarben, insbesondere ihrer Wasserverdünnbarkeit, leichte Verarbeitbarkeit und Umweltfreundlichkeit beeinträchtigt werden.

Diese Aufgabe konnte mit der nachstehend näher beschriebenen erfindungsgemäßen Verwendung von bestimmten organischen Polyisocyanaten überraschenderweise gelöst werden.

Es war zwar aus der DE-OS 27 08 442 bereits bekannt, die anwendungstechnischen Eigenschaften von wäßrigen, Polyurethane enthaltenden Kunststoff-Dispersionen durch Zusatz von organischen Diisocyanaten unter Beachtung bestimmter Kriterien bei der Zugabe des Diisocyanats zu verbessern. Beim Verfahren dieser Vorveröffentlichung müssen jedoch zwingend Polyurethane enthaltende Dispersionen verwendet werden, wobei als zuzusetzendes Polyisocyanat nur difunktionelle Diisocyanate in Betracht gezogen werden. Der Vorveröffentlichung ist daher keinerlei Anregung zu entnehmen, gebrauchsfertigen Dispersionsfarben auf Basis von im wesentlichen Urethangruppen-freien Homo- oder Copolymerisaten olefinisch ungesättigter Monomerer höherfunktionelle Polyisocyanate zuzusetzen, um so die lacktechnischen Eigenschaften der Dispersionsfarben zu verbessern.

Gegenstand der Erfindung ist die Verwendung von

a) organischen Polyisocyanaten mit aliphatisch und/oder cycloaliphatisch gebundenen Isocyanatgruppen einer NCO-Funktionalität von mindestens 3 und einer Viskosität bei 23°C von 50 bis 4000 mPa.s oder von

b) Gemischen organischer Polyisocyanate mit aliphatisch und/oder cycloaliphatisch gebundenen Isocyanatgruppen einer mittleren NCO-Funktionalität von mindestens 2,2 und einer Viskosität bei 23°C von 50 bis 4000 mPa.s

als Zusatzmittel für wäßrige, gegebenenfalls die üblichen Hilfs- und Zusatzmittel der Lacktechnologie enthaltende Dispersionsfarben, deren Bindemittel aus in Wasser dispergierten, im wesentlichen Urethangruppen-freien Homo- oder Copolymerisaten olefinisch ungesättigter Monomerer besteht.

Bei den erfindungsgemäß zu verwendenden Polyisocyanaten oder Polyisocyanatgemischen handelt es sich um solche der soeben genannten Art, vorzugsweise um Polyisocyanate einer NCO-Funktionalität von 3,0 oder um Polyisocyanatgemische einer mittleren NCO-Funktionalität von 2,4-3,5, die jeweils einen Gehalt an aliphatisch und/oder cycloaliphatisch, vorzugsweise ausschließlich aliphatisch gebundenen Isocyanatgruppen von 15 bis 25 Gew.-% und eine Viskosität bei 23° C von 50 bis 3000 mPas.s aufweisen.

Vorzugsweise werden, diesen Bedingungen entsprechende "Lackpolyisocyanate" auf Basis von Hexamethylendiisocyanat und/oder von 1-Isocyanato-3,3,5-trimethyl-5-isocyanatomethyl-cyclohexan (IPDI) insbesondere solche, welche ausschließlich auf Hexamethylendiisocyanat basieren, verwendet. Unter "Lackpolyisocyanate" auf Basis dieser Diisocyanate sind die an sich bekannten Biuret-, Urethan-, Uretdion- und/oder Isocyanuratgruppen aufweisenden Derivate dieser Diisocyanate zu verstehen, die im Anschluß an ihre Herstellung in bekannter Weise, vorzugsweise durch Destillation von überschüssigem Ausgangsdiisocyanat bis auf einen Restgehalt von höchstens 0,7, vorzugsweise von weniger als 0,5 Gew.-% befreit worden sind. Zu den besonders bevorzugten, erfindungsgemäß zu verwendenden Polyisocyanaten gehören, den obengenannten Kriterien entsprechende Biuretgruppen aufweisende Polyisocyanate auf Basis von Hexamethylendiisocyanat, wie sie beispielsweise nach den Verfahren der US-Patentschriften 3 124 605, 3 358 010, 3 903 126, 3 903 127 oder 3 976 622 erhalten werden können, und die aus Gemischen von N,N',N"-Tris-(6-isocyanatohexyl)-biuret mit untergeordneten Mengen seiner höheren Homologen bestehen; die den genannten Kriterien entsprechenden Trimerisate von Hexamethylendiisocyanat, wie sie gemäß US-PS 4 324 879 erhalten werden können, und die im wesentlichen aus N,N',N"-Tris-(6-isocyanatohexyl)-isocyanurat im Gemisch mit untergeordneten Mengen an seinen höheren Homologen bestehen, und insbesondere die den genannten Kriterien entsprechenden Gemische aus Uretdion- und/oder Isocyanuratgruppen aufweisenden Polyisocyanaten auf Basis von Hexamethylendiisocyanat, wie sie durch katalytische Trimerisierung von Hexamethylendiisocyanat unter Verwendung von Trialkylphosphinen entstehen. Besonders bevorzugt sind die zuletztgenannten Gemische einer Viskosität bei 23° C von 50 bis 500 mPa.s und einer zwischen 2,2 und 3 liegenden NCO-Funktionalität. Lackpolyisocyanate, die nicht nur auf Hexamethylendiisocyanat sondern zusätzlich noch auf IPDI basieren sind nur unter der Voraussetzung geeignet, daß sie die obengenannten Kriterien bezüglich der Viskosität erfüllen. Oftmals handelt es sich jedoch bei den entsprechenden Derivaten des IPDI um feste Produkte, die erfindungsgemäß nicht in Betracht kommen. Demzufolge sind die beispielhaft genannten Lackpolyisocyanate auf Basis von Hexamethylendiisocyanat bevorzugt.

Die erfindungsgemäß zu verwendenden Lackpolyisocyanate werden vorzugsweise lösungsmittelfrei verwendet. Auch hieraus folgt, daß ihre Viskosität bei Raumtemperatur (23° C) möglichst niedrig sein sollte, um ihre problemlose Einarbeitung in die Dispersionsfarbe zu ermöglichen. Der ganz besonders bevorzugte Viskositäsbereich für die Polyisocyanate liegt demzufolge bei 50 bis 500 mPa.s/23° C. Bei den erfindungsgemäß zu modifizierenden Dispersionsfarben handelt es sich um die üblichen Dispersionsfarben auf Basis von Homo- oder Copolymerisaten olefinisch ungesättigter Monomerer, d.h. beispielsweise auf Basis von Polyvinylacetat, Copolymerisaten des Vinylacetats mit Vinylchlorid und Ethylen, auf Basis von Homo- und Copolymerisaten von Acrylsäureestern und/oder Methacrylsäureestern, z.B. den Methyl-, Ethyl-, Propyl- und/oder Butylestern dieser Säuren, auf Basis von Copolymerisaten dieser Ester mit Styrol und gegebenenfalls Butadien oder auf Basis von Styrol-Butadien-Copolymerisaten.

Die der erfindungsgemäßen Verwendung zuzuführenden Dispersionsfarben sind in der Regel gebrauchsfertig, d.h. die erfindungsgemäße Verwendung erfolgt im allgemeinen kurz vor der praktischen Anwendung der Dispersionsfarbe. Demzufolge enthalten die Dispersionsfarben im allgemeinen die aus der Lacktechnologie bekannten Hilfs- und Zusatzmittel wie z.B. Emulgier- und Dispergiermittel, Netzmittel, Konservierungsstoffe, Verdickungsmittel, Pigmente, Füllstoffe und gegebenenfalls in untergeordneten Mengen organische Lösungsmittel, die oftmals auf die Verwendung von lösungsmittelhaltigen Zusatzmitteln der genannten Art bei der Herstellung der gebrauchsfertigen Dispersionsfarben zurückzuführen sind.

Bei der erfindungsgemäßen Verwendung erfolgt die Zugabe des Polyisocyanats zur Dispersionsfarbe unter einfachem Einrühren, wobei das Polyisocyanat im allgemeinen in einer Menge von 2 bis 20, vorzugsweise 5 bis 10 Gew.-%, bezogen auf die zu modifizierende Dispersionsfarbe, zum Einsatz gelangt. Die Dispersionsfarben weisen ihrerseits im allgemeinen einen Bindemittelgehalt, ohne Einbeziehung des Gewichts der Hilfs- und Zusatzmittel von ca. 40 bis 60 Gew.-% auf. Die Zugabe des Polyisocyanats kann durch einfaches Einrühren erfolgen, wobei besondere Vorsichtsmaßnahmen nicht erforderlich sind. Nach Zugabe des Polyisocyanats weisen die Dispersionsfarben im allgemeinen eine nur noch begrenzte Verarbeitungszeit auf und sollten daher innerhalb eines Zeitraums von ca. 1 bis 2 Stunden in an sich bekannter Weise verarbeitet werden. Die erfindungsgemäßen Dispersionsfarben eignen sich für alle beliebigen an sich bekannten Einsatzgebiete für wäßrige Dispersionsfarben der hier diskutierten Art, beispielsweise zur Beschichtung von mineralischen Baustoffoberflächen wie Kalk- und/oder Zement-gebundene Putze, Gips enthaltende Oberflächen, Holzfaser-Zement-Baustoffe, Beton, sowie von Holz und Holzwerkstoffen wie Spanplatten, Holzfaserplatten, oder von metallischen Oberflächen, von asphalthaltigen Straßenbelägen oder von diversen Kunststoff-Oberflächen.

Beispiele

Die in den nachfolgenden Beispielen angesetzten Dispersionsfarben setzen sich wie folgt zusammen:
26 Gew.-Teile Polymerisatdispersion, 50 %ig in Wasser
50 Gew.-Teile Pigmente und Füllstoffe
10 Gew.-Teile Hilfsstoffe (Benetzungsmittel, Entschäumer, Inhibitoren, Stabilisatoren u. dgl.) ca. 14 Gew.-Teile Wasser
In den Beispielen wurden folgende Polyisocyanate eingesetzt:

Polyisocyanat A:

Isocyanurat- und Uretdiongruppen aufweisendes Lackpolyisocyanat auf Basis von Hexamethylendiisocyanat einer mittleren NCO-Funktionalität von ca. 2,5, hergestellt durch katalytische Dimerisierung und Trimerisierung von Hexamethylendiisocyanat unter Verwendung von Tributylphosphin als Katalysator. Das Polyisocyanatgemisch weist bei 23° C eine Viskosität von 150 mPa.s und einen NCO-Gehalt von 22 Gew.-% auf. Der Gehalt an freiem Hexamethylendiisocyanat liegt bei unter 0,5 %.

Polyisocyanat B:

Biuretpolyisocyanat auf Basis von Hexamethylendiisocyanat einer Viskosität bei 23° C von 2500 mPa.s, einer NCO-Funktionalität von ca. 3,2 und einem NCO-Gehalt von 23 Gew.-% und einem Gehalt an freiem Hexamethylendiisocyanat von unter 0,5 Gew.-%.

Polyisocyanat C:

Isocyanuratgruppen aufweisendes Polyisocyanat auf Basis von Hexamethylendiisocyanat einer NCO-Funktionalität von ca. 3,2, einem NCO-Gehalt von 21,5 Gew.-%, einer Viskosität bei 23° C von ca. 2000 mPa.s und einem Gehalt an freiem Hexamethylendiisocyanat von unter 0,5 Gew.-%.

Beispiel 1

Eine weißpigmentierte, verarbeitungsfertige Dispersionsfarbe der obengenannten Zusammensetzung, deren Bindemittelanteil sich aus einem Acrylsäurebutylester/Styrol-Copolymerisat (® ERCUSOL AS 250 der Firma BAYER AG), zusammensetzt, wird bei Raumtemperatur mit 8 Gew.-%, bezogen auf Dispersionsfarbe des lösungsmittelfreien Polyisocyanats A versetzt. Nach Einmischen des Polyisocyanats in die verarbeitungsfertige Dispersionsfarbe erhält man ein Zweikomponenten-Beschichtungssystem mit einer Verarbeitungszeit von etwa zwei Stunden und einer Trocknung bis zur Griffestigkeit von ca. 25 Minuten. Dem nicht modifizierten Anstrich gegenüber zeichnet sich der daraus hergestellte, ausgehärtete Film durch folgende Eigenschaften aus:
(siehe auch "Beurteilungskriterien").

|  | nicht modifi- zierter An- strichfilm | mit Polyiso- cyanat A modifi- zierter Anstrich- film |
|---|---|---|
| Anlösbarkeit | 15 | 8 |
| Löser-Wischtest mit Testbenzin Doppelschübe | 3 | 11 |
| Scheuerfestigkeit Doppelschübe | 150-220 | 500-600 |

Beispiel 2

Eine weißpigmentierte, verarbeitungsfertige Dispersionsfarbe der obengenannten Zusammensetzung, deren Bindemittelanteil sich gemäß Angaben des Herstellers (®Mowilith DM 772, der Firma Hoechst AG) aus einem Copolymerisat von Acrylsäureestern zusammensetzt, wird mit 5 Gew.-%, bezogen auf Dispersionsfarbe, des Polyisocyanates A versetzt. Nach Homogenisierung des Ansatzes erhält man ein Beschichtungssystem mit einer Verarbeitungszeit von ca. 2 Stunden und einer Trocknungszeit bis zur Griffestigkeit von ca. 20 Minuten. Dem nicht modofizierten Anstrich gegenüber zeichnet sich der daraus hergestellte, ausgehärtete Film durch folgende Eigenschaften aus:

|  | nicht modifi- zierter An- strichfilm | mit Polyiso- cyanat A modifi- zierter Anstrich- film |
|---|---|---|
| Anlösbarkeit | 16 | 9 |
| Löser-Wischtest mit Testbenzin Doppelschübe | 4 | 9 |
| Scheuerfestigkeit Doppelschübe | 360 | 1085 |
| Haftung auf feuchtem Beton (DIN/ISO 4627) | 1,2 MPa | 2,9 MPa |
| Wasseraufnahme- Koeffizient (DIN 52617) | $10^{-2}$ kg/m$^2$ x h$^{0,5}$ | $10^{-3}$ kg/m$^2$ x h$^{0,5}$ |
| Abriebwert Taber Abraser, CS 10/1 kg/ 1000 U | 230 mg | 176 mg |

Beispiel 3

Eine weißpigmentierte, verarbeitungsfertige Dispersionsfarbe der obengenannten Zusammensetzung, deren Bindemittelanteil sich gemäß Angaben des Herstellers (®Mowilith DM 122,der Firma Hoechst AG) aus einem Copolymeren aus Vinylacetat, Vinylchlorid und Ethylen zusammensetzt, wird mit 10 Gew.-%, bezogen auf Dispersionsfarbe, des Polyisocyanates A versetzt. Die Verarbeitungszeit des gemischten Ansatzes beträgt 2 Stunden, die Trocknung bis zur Griffestigkeit ist innerhalb 40 Minuten gegeben. Dem nicht modifizierten Anstrichfilm gegenüber zeichnet sich der daraus hergestellte Film durch folgende Eigenschaften aus:

| | nicht modifizierter Anstrichfilm | mit Polyisocyanat A modifizierter Anstrichfilm |
|---|---|---|
| Anlösbarkeit | 19 | 9 |
| Löser-Wischtest mit Testbenzin Doppelschübe | 5 | 17 |
| Scheuerfestigkeit Doppelschübe | 220 | 2100 |
| Haftung auf feuchtem Beton (DIN/ISO 4627) | 0,7 MPa | 1,9 MPa |
| Wasseraufnahme- Koeffizient (DIN 52617) | $7 \times 10^{-2}$ kg/m$^2$h$^{0,5}$ | $6 \times 10^{-3}$ kg/m$^2$h$^{0,5}$ |

Beispiel 4

Eine weißpigmentierte, verarbeitungsfertige Dispersionsfarbe der obengenannten Zusammensetzung, deren Bindemittelanteil sich aus Acrylsäurebutylester/Styrol-Copolymeren zusammensetzt (®Ercusol AS 250 der Firma Bayer AG) wird mit 8 Gew.-%, bezogen auf Dispersionsfarbe, des Polyisocyanates B versetzt. Die Verarbeitungszeit des fertigen Ansatzes beträgt ca. eine Stunde, die Trocknung bis zur Griffestigkeit 20 bis 25 Minuten. Dem nicht modifizierten Anstrich gegenüber zeichnet sich der modifizierte Anstrichfilm durch erheblich verbesserte Löserbeständigkeit aus.

| | nicht modifizierter Anstrichfilm | mit Polyisocyanat B modifizierter Anstrichfilm |
|---|---|---|
| Anlösbarkeit | 12 | 4 |

Beispiel 5

Eine weißpigmentierte Dispersionsfarbe der obengenannten Zusammensetzung, deren Bindemittelanteil sich aus einem Styrol/Butadien-Copolymeren zusammensetzt (®LITEX SB 40 der Firma Chemische Werke Hüls AG) wird mit 13 Gew.-%, bezogen auf Dispersionsfarbe, des lösemittelfreien Polyisocyanates A versetzt. Nach homogener Vermischung der beiden Komponenten erhält man ein Gemisch mit einer Verarbeitungszeit von 1 Stunde. Die Trocknung bis zur Grifffestigkeit beträgt etwa 20 Minuten. Dem nicht modifizierten Anstrich gegenüber zeichnet sich der daraus hergestellte, ausgehärtete Film durch folgende Eigenschaften aus:

|  | nicht modifizierter An-strichfilm | mit Polyiso-cyanat A modifi-zierter Anstrich-film |
|---|---|---|
| Anlösbarkeit | 17 | 6 |
| Löser-Wischtest mit Testbenzin Doppelschübe | 5 | 9 |
| Scheuerfestigkeit Doppelschübe | 115 | 1142 |
| Haftung auf feuchtem Beton (DIN/ISO 4627) | 1,2 MPa | 2,9 MPa |

Beispiel 6

Eine weißpigmentierte, verarbeitungsfertige Dispersionsfarbe gemäß Beispiel 1 wird mit 8 Gew.-%, bezogen auf Dispersionsfarbe des lösemittelfreien Polyisocyanates C versetzt. Nach Einmischen des Polyisocyanat-Anteiles in die verarbeitungsfertige Dispersion erhält man ein Beschichtungssystem mit einer Verarbeitungszeit von 4 Stunden. Die Trocknung bis zur Grifffestigkeit beträgt 20 Minuten. Dem nicht modifizierten Anstrich gegenüber zeichnet sich der daraus hergestellte, ausgehärtete Film durch folgende Eigenschaften aus:

|  | nicht modifizierter An-strichfilm | mit Polyiso-cyanat A modifi-zierter Anstrich-film |
|---|---|---|
| Anlösbarkeit | 15 | 9 |
| Löser-Wischtest mit Testbenzin Doppelschübe | 3 | 8 |

Beurteilungskriterien

7

Anlösbarkeit

Wattebäusche, getränkt jeweils mit den organischen Lösern Testbenzin, Toluol, Ethylglykolacetat, Aceton, Ethanol wurden 1 Minute lang auf die Filmoberfläche gelegt. Nach dem anschließenden Entfernen der Wattebäusche wurde die Filmoberfläche mit Filterpapier kurz abgetupft und innerhalb 10 bis 15 Sekunden manuell (Fingernagel-Probe) auf Anquellung getestet. Das Beurteilungsschema lautet:

0 =     Film ist unverändert

1 =     Film ist Spur angequollen (die Oberfläche ist nicht anritzbar, zeigt jedoch einen kaum sichtbaren Qeullkranz durch die Löser-Einwirkung.

2 =     Film ist etwas angequollen (die Filmoberfläche gering anritzbar).

3 =     Film zeigt mittlere Quellung (Quellkranz ist deutlich sichtbar, Oberfläche ist anritzbar)`

4 =     Film zeigt starke Quellung (Filmsubstanz kann bis zum Untergrund angekratzt werden).

5 =     Film zeigt sehr starke Quellung (Filmsubstanz ist im betr` Löser teilweise bis vollständig löslich und hinterläßt über längere Zeit klebrige Oberfläche).

Beurteilt wurde die Summe sämtlicher Einzelbewertungen, also 0 günstigstenfalls und 25 ungünstigstenfalls.

Löser-Wischtest

Ein schwarzer Leinenlappen wurde mit Testbenzin getränkt und so oft mit leichtem Druck über die Oberfläche des ausgehärteten Filmes gewischt bis eine erste geringfügige Abkreidung visuell erkennbar war. Beurteilt wurde die Anzahl an Doppelschüben.

Scheuerfestigkeit

Diese Prüfung erfolgte in Anlehnung an DIN 73 778, wobei zur besseren Differenzierungsmöglichkeit folgende Änderungen notwendig waren:

Anstelle Scheuerbürste wurde die Auflagefläche mit Naßschleifpapier der Körnung 220 bestückt.

Die Gewichtsbelastung des Scheuerkastens wurde um weitere 0,5 kg beaufschlagt und betrug somit 1,0 kg.

Als Waschflüssigkeit diente destilliertes Wasser.

Beurteilt wurde die Anzahl an Doppelschüben bis zur ersten visuellen Wahrnehmung durchgescheuerter Stellen auf dem schwarzen Untergrund.

**Ansprüche**

1.    Verwendung von

a) organischen Polyisocyanaten mit aliphatisch und/oder cycloaliphatisch gebundenen Isocyanatgruppen einer NCO-Funktionalität von mindestens 3 und einer Viskosität bei 23°C von 50 bis 4000 mPa.s oder von

b) Gemischen organischer Polyisocyanate mit aliphatisch und/oder cycloaliphatisch gebundenen Isocyanatgruppen einer mittleren NCO-Funktionalität von mindestens 2,2 und einer Viskosität bei 23°C von 50 bis 4000 mPa.s

als Zusatzmittel für wäßrige, gegebenenfalls die üblichen Hilfs- und Zusatzmittel der Lacktechnologie enthaltende Dispersionsfarben, deren Bindemittel aus in Wasser dispergierten, im wesentlichen Urethangruppen-freien Homo- oder Copolymerisaten olefinisch ungesättigter Monomerer besteht.

2.    Verwendung von organischen Polyisocyanaten a) gemäß Anspruch 1, dadurch gekennzeichnet, daß das Polisocyanat eine NCO-Funktionalität von 3, einen NCO-Gehalt von 15 bis 25 Gew.-% und eine Viskosität bei 23°C von 50 bis 3000 mPa.s aufweist.

3.    Verwendung von Gemischen organischer Polyisocyanate b) gemäß Anspruch 1, dadurch gekennzeichnet, daß das Polyisocyanatgemisch eine mittlere NCO-Funktionalität von 2,4 bis 3,5, einen NCO-Gehalt von 15 bis 25 Gew.-% und eine Viskosität bei 23°C von 50 bis 3000 mPa.s aufweist.

**Claims**

1.  The use of
    a) organic polyisocyanates containing aliphatically and/or cycloaliphatically bound isocyanate groups having an NCO functionality of at least 3 and a viscosity at 23°C of 50 to 4,000 mPa.s
    or of
    b) mixtures of organic polyisocyanates containing aliphatically and/or cycloaliphatically bound isocyanate groups having an average NCO functionality of at least 2.2 and a viscosity at 23°C of 50 to 4,000 mPa.s
    as additives for water-based emulsion paints which optionally contain the auxiliaries and additives typically used in paints and of which the binder consists of homopolymers or copolymers of olefinically unsaturated monomers substantially free from urethane groups dispersed in water.

2.  The use of the organic polyisocyanates a) according to claim 1, characterized in that the polyisocyanate has an NCO functionality of 3, an NCO content of 15 to 25% by weight and a viscosity at 23°C of 50 to 3,000 mPa.s.

3.  The use of mixtures of organic polyisocyanates b) according to claim 1, characterized in that the polyisocyanate mixture has an average NCO functionality of 2.4 to 3.5, an NCO content of 15 to 25% by weight and a viscosity at 23°C of 50 to 3,000 mPa.s.


**Revendications**

1.  Utilisation
    a) de polyisocyanates organiques porteurs de groupes isocyanato en liaison aliphatique et/ou cycloaliphatique de fonctionnalité NCO au moins égale à 3 et de viscosité à 23°C égale à 50-4000 mPa.s ou
    b) de mélanges de polyisocyanates organiques porteurs de groupes isocyanato en liaison aliphatique et/ou cycloaliphatique de fonctionnalité NCO moyenne au moins égale à 2,2 et de viscosité à 23°C égale à 50-4000 mPa.s
    comme additifs pour peintures à l'eau en dispersion contenant le cas échéant des adjuvants et additifs d'emploi classique dans la technologie des peintures, dont le liant est constitué d'homopolymères ou de copolymères de monomères à non-saturation oléfinique, principalement dépourvus de groupes uréthanne, en dispersion dans l'eau.

2.  Utilisation de polyisocyanates organiques a) suivant la revendication 1, caractérisée en ce que le polyisocyanate a une fonctionnalité NCO égale à 3, une teneur en NCO de 15 à 25 % en poids et une viscosité à 23°C de 50 à 3000 mPa.s.

3.  Utilisation de mélanges de polyisocyanates organiques b) suivant la revendication 1, caractérisée en ce que le mélange de polyisocyanates présente une fonctionnalité NCO moyenne de 2,4 à 3,5, une teneur en NCO de 15 à 25 % en poids et une viscosité à 23°C de 50 à 3000 mPa.s.